(19)

Europäisches
Patentamt
European
Patent Office
Office européen
des brevets

(11) **EP 3 015 803 A1**

(12) **EUROPEAN PATENT APPLICATION**

(43) Date of publication:
04.05.2016 Bulletin 2016/18

(51) Int Cl.:
*F25D 31/00* $^{(2006.01)}$  *G01K 7/42* $^{(2006.01)}$

(21) Application number: 14190504.2

(22) Date of filing: 27.10.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: **Danfoss A/S**
**6430 Nordborg (DK)**

(72) Inventors:
• **Izadi-Zamanabad, Roozbeh**
**6400 Sønderborg (DK)**
• **Shafiei, Seyed Ehsan**
**9000 Aalborg (DK)**

(54) **A method for estimating thermal capacity of foodstuff**

(57)     A method for estimating a thermal capacity of foodstuff stored in a refrigerated volume of a refrigeration system. A thermal capacity of air inside the refrigerated volume is estimated, e.g. a time constant. Then the setpoint temperature for the air inside the refrigerated volume is changed, and the air temperature inside the refrigerated volume is monitored. A thermal capacity of the foodstuff stored in the refrigerated volume, e.g. a time constant, is estimated, based on the monitored air temperature and on the estimated thermal capacity of the air inside the refrigerated volume. The refrigeration system is controlled at least partly on the basis of the estimated thermal capacity of the foodstuff stored in the refrigerated volume.

Fig. 1

EP 3 015 803 A1

**Description**

FIELD OF THE INVENTION

The present invention relates to a method for estimating a thermal capacity of foodstuff stored in a refrigerated volume of a refrigeration system, and for controlling the refrigeration system, based on the estimated thermal capacity of the foodstuff.

BACKGROUND OF THE INVENTION

When goods, such as foodstuff, are stored in a refrigerated volume, such as a display case in a supermarket, it is desirable to control the temperature inside the refrigerated volume in such a manner that the goods are stored at a temperature which is within an acceptable temperature range. To this end the air temperature inside the refrigerated volume is normally measured, and a refrigeration system is controlled in such a manner that the air temperature is maintained within an acceptable temperature range. However, the air temperature inside the refrigerated volume is not necessarily the same as the temperature of the stored goods. Therefore, the temperature of the stored goods may very well be maintained within an acceptable temperature range, even if the air temperature inside the refrigerated volume is allowed to exceed the boundaries of the acceptable temperature range for a short period of time. This may, e.g., be used if it is desired to use the stored goods for energy storage, or if it is desired to implement cooling down of new goods being added to the refrigerated volume in an energy efficient manner.

It may therefore be desirable to obtain knowledge regarding thermal dynamics of the foodstuff being stored.

US 7,596,432 B2 discloses a method for controlling the temperature inside a cavity of a cooling appliance provided with a temperature sensor inside the cavity and with actuator means, such as a compressor, a damper and/or a fan, for adjusting the cooling capacity of the appliance. The food temperature is estimated on the basis of the value from the temperature sensor and on a predetermined function of the status of the actuator means.

US 6,471,398 B2 discloses a temperature management apparatus for foodstuffs stored in a storage cabinet, wherein a temperature sensor is placed in the storage cabinet to detect an inside temperature of the cabinet, thereby to calculate an ambient temperature of the foodstuffs, based on the detected inside temperature. An internal temperature of the foodstuffs is presumed on a basis of the calculated ambient temperature.

DESCRIPTION OF THE INVENTION

It is an object of embodiments of the invention to provide a method for controlling a refrigeration system while taking thermal dynamics of foodstuff stored in a refrigerated volume of the refrigeration system into account.

It is a further object of embodiments of the invention to provide a method for estimating a thermal capacity of foodstuff stored in a refrigerated volume, based on actual measurements performed on the refrigeration system.

The invention provides a method for estimating a thermal capacity of foodstuff stored in a refrigerated volume of a refrigeration system, the refrigeration system comprising a compressor unit, a condenser unit, an expansion valve and an evaporator, arranged in a refrigerant path, the evaporator being arranged in thermal contact with the refrigerated volume, and the expansion valve being provided in the refrigerant path upstream of the evaporator, an opening degree of the expansion valve being controlled on the basis of a temperature of air inside the refrigerated volume and in order to obtain a temperature of the air inside the refrigerated volume which is equal to a setpoint temperature, the method comprising the steps of:

- estimating a thermal capacity of air inside the refrigerated volume,

- changing the setpoint temperature for the air inside the refrigerated volume,

- monitoring the air temperature inside the refrigerated volume,

- estimating a thermal capacity of the foodstuff stored in the refrigerated volume, based on the monitored air temperature inside the refrigerated volume, and based on the estimated thermal capacity of the air inside the refrigerated volume, and

- controlling the refrigeration system at least partly on the basis of the estimated thermal capacity of the foodstuff stored in the refrigerated volume.

The invention relates to a method for estimating a thermal capacity of foodstuff stored in a refrigerated volume of a refrigeration system. In the present context the term 'refrigeration system' should be interpreted to mean any system in which a flow of fluid medium, such as refrigerant, circulates and is alternatingly compressed and expanded, thereby providing refrigeration or heating of a volume. Thus, the refrigeration system may be a cooling system, a freezer, etc.

The refrigeration system comprises a compressor unit, comprising one or more compressors, a condenser unit, comprising one or more condensers or one or more gas coolers, an expansion valve and an evaporator arranged in a refrigerant path. Refrigerant flowing in the refrigerant path is compressed by the compressors of the compressor unit. The compressed refrigerant is supplied to the condenser unit, where the refrigerant is at least partly condensed, and heat exchange takes place with the ambient in such a manner that heat is rejected from the refrigerant flowing through the condensers or gas coolers of the condenser unit. The refrigerant is then supplied to the expansion valve, where the refrigerant is expanded, before being supplied to the evaporator. The refrigerant being supplied to the evaporator is thereby in a mixed liquid and gaseous state. In the evaporator the liquid part of the refrigerant is at least partly evaporated, and heat exchange takes place with the ambient in such a manner that heat is absorbed by the refrigerant flowing through the evaporator. Finally, the refrigerant is once again supplied to the compressor unit.

The evaporator is arranged in thermal contact with a refrigerated volume. Thus, the refrigerated volume is cooled, due to the heat exchange with the refrigerant flowing through the evaporator. Accordingly, cooling is also provided for foodstuff stored in the refrigerated volume.

The expansion valve is provided in the refrigerant path upstream of the evaporator. Thereby the supply of refrigerant to the evaporator is controlled by means of the expansion valve, more particularly by varying an opening degree of the expansion valve.

The opening degree of the expansion valve, and thereby the supply of refrigerant to the evaporator, is controlled on the basis of a temperature of air inside the refrigerated volume and in order to obtain a temperature of air inside the refrigerated volume which is equal to a setpoint temperature. Accordingly, it is attempted to control the refrigeration system in such a manner that the foodstuff stored in the refrigerated volume is stored at the setpoint temperature.

During a steady state situation, the temperature of the foodstuff stored in the refrigerated volume is equal to an average temperature of air inside the refrigerated volume. However, when the temperature of air inside the refrigerated volume is changed, a difference between the temperature of the air and the temperature of the foodstuff will exist for a period of time, until a new steady state situation has been established, because the thermal capacity of the foodstuff will normally be higher than the thermal capacity of the air. The length of the period of time depends on the difference or ratio between the thermal capacity of the foodstuff and the thermal capacity of the air. Thus, it may sometimes be safe to increase or decrease the temperature of air inside the refrigerated volume, for a limited period of time, without risking that the temperature of the foodstuff stored in the refrigerated volume is increased or decreased to an unacceptable temperature level.

According to the method of the invention, a thermal capacity of air inside the refrigerated volume is initially estimated. The actual physical quantity 'thermal capacity' may be estimated, or another quantity being representative for the thermal capacity may be estimated. This provides a measure for the thermal dynamics of the air inside the refrigerated volume, i.e. a measure for how fast the temperature of air inside the refrigerated volume increases or decreases in response to changes in ambient conditions or operating parameters, such as changes in the supply of refrigerant to the evaporator.

Next, the setpoint temperature for the air inside the refrigerated volume is changed. As a consequence, the opening degree of the expansion valve, and thereby the supply of refrigerant to the evaporator, is controlled in order to obtain a temperature of the air inside the refrigerated volume, which is equal to the new setpoint temperature. Accordingly the temperature of air inside the refrigerated volume is gradually changed, i.e. the temperature is either increased or decreased.

Following the changing of the setpoint temperature for the air inside the refrigerated volume, the air temperature inside the refrigerated volume is monitored. When the expansion valve is controlled in order to obtain the new setpoint temperature of the air inside the refrigerated volume, the change in the temperature of air inside the refrigerated volume depends on the heat transfer between the evaporator and the air inside the refrigerated volume, but also on the heat transfer between the foodstuff stored in the refrigerated volume and the air inside the refrigerated volume. Therefore, monitoring the air temperature inside the refrigerated volume provides information regarding the thermal capacity of the foodstuff stored inside the refrigerated volume, or at least information regarding the relationship between the thermal capacity of the air inside the refrigerated volume and the thermal capacity of the foodstuff stored inside the refrigerated volume.

Thus, a thermal capacity of the foodstuff stored in the refrigerated volume is estimated, based on the monitored air temperature inside the refrigerated volume, and based on the estimated thermal capacity of the air inside the refrigerated volume. Similarly to what is described above, the actual physical quantity 'thermal capacity' may be estimated, or another quantity being representative for the thermal capacity may be estimated.

Finally, the refrigeration system is controlled at least partly on the basis of the estimated thermal capacity of the foodstuff stored in the refrigerated volume.

Thus, according to the invention, the thermal capacity of the foodstuff stored in the refrigerated volume is estimated, purely by estimating the thermal capacity of the air inside the refrigerated volume, and by monitoring the temperature of the air inside the refrigerated volume. These are quantities that can easily be measured or otherwise obtained, using sensors which are normally present in a refrigeration system, such as a temperature sensor for measuring the temperature of the air inside the refrigerated volume.

Furthermore, once the thermal capacity of the foodstuff stored in the refrigerated volume has been estimated, it can be used for controlling the refrigeration system, while taking the thermal capacity of the foodstuff into account. For instance, the refrigeration system may be controlled in such a manner that the temperature of the air inside the refrigerated volume is allowed to increase above an upper temperature limit for a limited period of time, where the limited period of time is selected in such a manner that the temperature of the foodstuff will not increase above the upper temperature limit during the period of time where the temperature of the air inside the refrigerated volume is allowed to increase above the upper temperature limit. Thus, the temperature of the air inside the refrigerated volume can be increased, thereby saving energy, without risking that the actual temperature of the foodstuff increases above an acceptable temperature limit, i.e. without affecting the food safety.

The step of estimating a thermal capacity of air inside the refrigerated volume may comprise determining a time constant being representative for thermal dynamics of the air inside the refrigerated volume. The time constant may, e.g., reflect how fast the temperature of the air inside the refrigerated volume changes in response to a change in temperature of the evaporator and/or other objects being arranged in thermal contact with the air inside the refrigerated volume.

Similarly, the step of estimating a thermal capacity of the foodstuff stored in the refrigerated volume may comprise determining a time constant being representative for thermal dynamics of the foodstuff stored inside the refrigerated volume. The time constant may, e.g., reflect how fast the temperature of the foodstuff changes in response to changes in the temperature of the air inside the refrigerated volume. The thermal dynamics of the air inside the refrigerated volume and the thermal dynamics of the foodstuff stored in the refrigerated volume in combination determine the heat transfer between the air inside the refrigerated volume and the foodstuff stored in the refrigerated volume.

The step of monitoring the temperature of air inside the refrigerated volume may comprise determining a time interval elapsing from the setpoint temperature for the air inside the refrigerated volume is changed until the temperature of air inside the refrigerated volume reaches a predefined temperature level, and the thermal capacity of foodstuff stored inside the refrigerated volume may further be estimated based on the determined elapsed time interval.

According to this embodiment, the temperature of air inside the refrigerated volume is monitored in order to determine how fast the temperature of the air responds to the change in setpoint temperature, notably how fast a predefined temperature level is reached, following the change in setpoint temperature. As described above, the change in temperature of air inside the refrigerated volume depends on the thermal dynamics of the foodstuff stored in the refrigerated volume, and on the thermal dynamics of the air inside the refrigerated volume.

For instance, if the thermal dynamics of the foodstuff stored in the refrigerated volume are slow, the heat transfer between the foodstuff stored in the refrigerated volume and the air inside the refrigerated volume is low, and the temperature of the foodstuff stored in the refrigerated volume will only have little effect on the temperature of the air inside the refrigerated volume. As a consequence, the temperature of the air inside the refrigerated volume will change relatively fast, and the time interval elapsing before the predefined temperature level is reached is therefore relatively short in this case.

On the other hand, if the thermal dynamics of the foodstuff stored in the refrigerated volume are fast, the heat transfer between the foodstuff stored in the refrigerated volume and the air inside the refrigerated volume is high, and the temperature of the foodstuff stored in the refrigerated volume will have a significant effect on the temperature of the air inside the refrigerated volume. This will slow down the change in the temperature of the air inside the refrigerated volume, and as a consequence, the time interval elapsing before the predefined temperature level is reached is therefore relatively long in this case.

Thus, information regarding the thermal capacity of the foodstuff stored in the refrigerated volume can be derived from the length of the time interval elapsing from the setpoint temperature for the air inside the refrigerated volume is changed until the predefined temperature level is reached.

The predefined temperature level may be a cut-in temperature representing an upper temperature limit of a temperature deadband associated with the setpoint temperature of the air inside the refrigerated volume.

When controlling a refrigeration system in order to obtain a temperature of air inside the refrigerated volume which is equal to a setpoint temperature, the refrigeration system is often controlled in such a manner that the temperature of the air is kept within a temperature deadband with a lower temperature limit below the setpoint temperature and an upper temperature limit above the setpoint temperature.

When the temperature of the air inside the refrigerated volume reaches the upper temperature limit, the expansion valve is opened in order to decrease the temperature of the air inside the refrigerated volume. Therefore the upper temperature limit is sometimes referred to as the cut-in temperature.

When the temperature of the air inside the refrigerated volume reaches the lower temperature limit, the expansion valve is closed in order to allow the temperature of the air inside the refrigerated volume to increase. Therefore the lower temperature limit is sometimes referred to as the cut-out temperature.

In the case that the setpoint temperature is increased during the step of changing the setpoint temperature, the expansion valve may initially be closed in order to allow the temperature of the air inside the refrigerated volume to increase to the new setpoint temperature. When the cut-in temperature is reached, the expansion valve is opened, and a normal deadband control of the expansion valve, with respect to the new setpoint, is initiated. Accordingly, the time interval elapsing from the setpoint temperature was increased until the cut-in temperature is reached, provides a suitable measure for how fast the temperature of the air inside the refrigerated volume changes to establish a new 'normal' situation, based on the new setpoint temperature.

The step of controlling the refrigeration system at least partly on the basis of the estimated thermal capacity of the foodstuff stored in the refrigerated volume may further comprise controlling the refrigeration system in accordance with a request for increased or decreased power consumption by the refrigeration system received from a power grid which the refrigeration system is connected to.

A power grid normally has a number of power producers and a number of power consumers connected thereto. The total power consumption of the power consumers may vary significantly, even on a relatively small timescale. Some of the power producers may be large power plants. The power production of such large power plants can not easily be adjusted, in particular on a small timescale. Therefore it may sometimes be desirable to request some of the power consumers to adjust their power consumption, in order to match the total power production of the power producers and the total power consumption of the power consumers. This is sometimes referred to as a smart grid.

For instance, in a refrigeration system the temperature of air inside the refrigerated volume may be increased in order to reduce the power consumption, or decreased in order to increase the power consumption of the refrigeration system for a limited period of time. However, this may only be done if it is safe with respect to the foodstuff stored in the refrigerated volume. According to this embodiment of the invention, the estimated thermal capacity of the foodstuff stored in the refrigerated volume can be used for determining how much and for how long the temperature of air inside the refrigerated volume can be allowed to deviate from the normal setpoint temperature, without risking that the foodstuff stored in the refrigerated volume is damaged. Thus, the method of the invention allows the refrigeration system to be used as an active power consumer in a smart grid.

The step of changing a setpoint temperature for the air inside the refrigerated volume may comprise increasing the setpoint temperature. As an alternative, the setpoint temperature may be decreased.

According to one embodiment of the invention the method may be performed in the following manner.

Our starting point is the lumped temperature model that describes the dynamic behaviour of the food temperature as well as the air temperature based on the energy balance considerations. For the food we have:

$$MC_{p,food}\frac{dT_{food}}{dt} = -\dot{Q}_{food-air} \tag{1}$$

and the dynamic equation describing the air temperature is:

$$MC_{p,air}\frac{dT_{air}}{dt} = \dot{Q}_{food-air} + \dot{Q}_{load} - \dot{Q}_e \tag{2}$$

where

$$\dot{Q}_{food-air} = UA_{food-air}(T_{food} - T_{air}) \tag{3}$$

$$\dot{Q}_{load} = U A_{air} \left( T_{indoor} - T_{air} \right) \tag{4}$$

$$\dot{Q}_e = \dot{m}_r \left( h_{oe} - h_{ie} \right) \tag{5}$$

Denoting

$$\tau_{food} = \frac{M C_{p,food}}{U A_{food-air}}$$

then we have

$$\tau_{food} \frac{dT_{food}}{dt} = T_{air} - T_{food} \tag{6}$$

In steady state we can assume that

$$T_{food,steady} = \bar{T}_{a_1} = \frac{T_{A_1} + T_{A_2}}{2}$$

Now, assume that at time t = $t_0$ we change the air setpoint by $\Delta t_a$ through a step change, where

$$\Delta t_a = \bar{T}_{a_2} - \bar{T}_{a_1}$$

where $\bar{T}_{a_2} = \dfrac{T_{A_3} + T_{A_4}}{2}$ . The temperature trajectory of the food is hence given by

$$T_{food}(t) = \bar{T}_{a_1} + \Delta t_a \left( 1 - e^{\frac{-t}{\tau_{food}}} \right) \tag{7}$$

And according to Equation 1 the $\overline{Q}_{food\text{-}aiv}$ is described by

$$\dot{Q}_{food-air} = UA_{food-air}\Delta t_a e^{\frac{-t}{\tau_{food}}} \tag{8}$$

Now, for a given interval $[t_1; ; t_2]$ the average food load can be computed as:

$$\bar{\dot{Q}}_{food-air} = \frac{1}{t_2 - t_1} \int_{t_1}^{t_2} \dot{Q}_{food-air}\,dt \tag{9}$$

By inserting Equation 8 into Equation 9 we get

$$\bar{\dot{Q}}_{food-air} = \frac{1}{t_2 - t_1}\Delta T_a MC_{p,food} e^{\frac{-t_1}{\tau_{food}}}\left(1 - e^{\frac{-(t_2 - t_1)}{\tau_{food}}}\right) \tag{10}$$

Dynamic of the air

The dynamic of the air when there is no cooling, i.e. $\overline{Q}_a = 0$, and under the assumption that the food load dynamics is slow and hence can be represented by an average (constant) value during this period. Hence,

$$MC_{p,air}\frac{dT_{air}}{dt} = \bar{\dot{Q}}_{food-air} + \dot{Q}_{load} \tag{11}$$

and using

$$\tau_{air} = \frac{MC_{p,air}}{UA_{air}}$$

we get

$$\tau_{air}\frac{dT_{air}}{dt} = \underbrace{\frac{\bar{\dot{Q}}_{food-air}}{UA_{air}} + T_{indoor}}_{u} - T_{air} \tag{12}$$

with the solution

$$T_{air} = T_{air_0} + u\left(1 - e^{\frac{-t}{\tau_{air}}}\right) \tag{13}$$

<u>Calculations</u>

Assumption: The time constant $\tau_{air}$ is known (or estimated). This assumption will be valid as $\tau_{air}$ can be estimated as soon as a step change in the reference signal for the air temperature is initiated.

Now, after initiating the step change in the air temperature reference we have the following information:

$$T_{air_0} = T_{air_{(3')}} = T_{A_2},$$

$$T_{air_{(4)}} = T_{A_4},$$

$$\Delta t_{(3')-(4)} = t_{(4)} - t_{(3')},$$

and hence

$$T_{air_{(4)}} - T_{air_{(3')}} = T_{A_4} - T_{A_2} = u^{(3')-(4)}\left(1 - e^{\frac{-\Delta t_{(3')-(4)}}{\tau_{air}}}\right) \tag{14}$$

also the average food load in the period of $\Delta t_{(3')-(4)}$ is calculated as

$$\bar{Q}_{food-air}^{(3')-(4)} = \frac{1}{\Delta t_{(3')-(4)}}\Delta T_a M C_{p,food}\left(1 - e^{\frac{-(\Delta t_{(3')-(4)})}{\tau_{food}}}\right) \tag{15}$$

The term $e^{\frac{-t_1}{\tau_{food}}}$ in the original equation is equal to 1 as the time (3') is the start point of the step change.

Now consider the next time the air temperature rises. Then similar to the previous calculations we have:

$$\bar{Q}_{food-air}^{(5)-(6)} = \frac{1}{\Delta t_{(5)-(6)}}\Delta T_a M C_{p,food}$$
$$\left(1 - e^{\frac{-(\Delta t_{(5)-(6)})}{\tau_{food}}}\right)e^{\frac{-(t_{(5)}-t_{(3')}}{\tau_{food}}} \tag{16}$$

And on the air side we have

$$T_{A_4} - T_{A_3} = u^{(5)-(6)}\left(1 - e^{\frac{-\Delta t_{(5)-(6)}}{\tau_{air}}}\right) \tag{17}$$

Further, assume that $T_{indoor}$ is constant (which is a valid assumption) then we get from Equation 14

$$\underbrace{\frac{T_{A_4} - T_{A_2}}{1 - e^{\frac{-\Delta t_{(3')-(4)}}{\tau_{air}}}} - T_{indoor}}_{\Theta} = \frac{\bar{\dot{Q}}_{food-air}^{(3')-(4)}}{UA_{air}} \tag{18}$$

and from Equation 17 we get

$$\underbrace{\frac{T_{A_4} - T_{A_3}}{1 - e^{\frac{-\Delta t_{(5)-(6)}}{\tau_{air}}}} - T_{indoor}}_{\Phi} = \frac{\bar{\dot{Q}}_{food-air}^{(5)-(6)}}{UA_{air}} \tag{19}$$

Dividing both sides of the Equation 18 with corresponding terms in Equation 19 we get:

$$\frac{\Theta}{\Phi} = \frac{\bar{\dot{Q}}_{food-air}^{(3')-(4)}}{\bar{\dot{Q}}_{food-air}^{(5)-(6)}} \tag{20}$$

After inserting the terms for the average food loads and simplifications we get the following equation:

$$\frac{\Theta \Delta t_{(3')-(4)}}{\Phi \Delta t_{(5)-(6)}} \left(1 - e^{\frac{-(\Delta t_{(5)-(6)})}{\tau_{food}}}\right) e^{\frac{-(t_{(5)} - t_{(3')})}{\tau_{food}}} = \left(1 - e^{\frac{-(\Delta t_{(3')-(4)})}{\tau_{food}}}\right) \tag{21}$$

This equation is nonlinear but with only one unknown variable ($\tau_{food}$) and hence can be solved by utilizing numerical methods, such as Newton-Raphson method.

BRIEF DESCRIPTION OF THE DRAWINGS

The invention will now be described in further detail with reference to the accompanying drawings in which

Fig. 1 is a block diagram illustrating a method according to an embodiment of the invention,

Fig. 2 is a graph illustrating temperature variations in a refrigeration system being controlled in accordance with a method according to an embodiment of the invention, and

Fig. 3 is a flow chart illustrating a method according to an embodiment of the invention.

DETAILED DESCRIPTION OF THE DRAWINGS

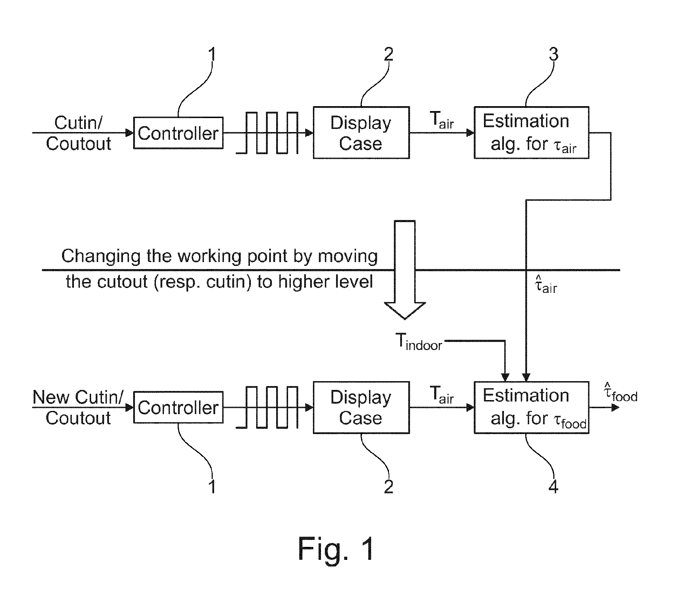

Fig. 1 is a block diagram illustrating a method according to an embodiment of the invention. A temperature setpoint and corresponding cut-in and cut-out temperatures are supplied to a controller 1. The controller 1 then controls an opening degree of an expansion valve, in order to obtain a temperature of air inside a refrigerated volume 2, in the form of a display case, which is within the temperature deadband defined by the cut-in and cut-out temperatures. The expansion valve is arranged in a refrigerant path upstream relative to an evaporator which is arranged in thermal contact with the refrigerated volume 2, the expansion valve thereby controlling the supply of refrigerant to the evaporator.
The temperature, $T_{air}$, of air inside the refrigerated volume 2 is measured and supplied to a first estimator 3.

Based on the measured air temperature, Tar, the first estimator 3 estimates a thermal capacity of air inside the refrigerated volume 2. This includes estimating a time constant, $\tau_{air}$, which is representative for the thermal dynamics of the air inside the refrigerated volume 2. The time constant, $\tau_{air}$, may, e.g., represent how fast the temperature of the air inside the refrigerated volume 2 reacts to changes, such as a change in setpoint temperature for the air inside the refrigerated volume 2.

At a certain point in time the setpoint temperature and the corresponding cut-in and cut-out temperatures are changed, e.g. to a higher temperature level. This is illustrated in the lower part of Fig. 1.

The new setpoint temperature and the corresponding new cut-in and cut-out temperatures are supplied to the controller 1, and the controller 1 controls the opening degree of the expansion valve in the manner described above, but in accordance with the new setpoint temperature and corresponding cut-in and cut-out temperatures.

Once again, the temperature, $T_{air}$, of air inside the refrigerated volume 2 is measured, and the measured air temperature, $T_{air}$, is supplied to a second estimator 4. The time constant, $\tau_{air}$, being representative for the thermal dynamics of the air inside the refrigerated volume 2, which was estimated by the first estimator 3, is also supplied to the second estimator 4. Based on the measured air temperature, $T_{air}$, and the previously estimated time constant, $\tau_{air}$, for the air inside the refrigerated volume 2, the second estimator 4 estimates a thermal capacity of the foodstuff stored in the refrigerated volume 2. This includes estimating a time constant, $\tau_{food}$, which is representative for the thermal dynamics of the foodstuff stored in the refrigerated volume 2. The time constant, $\tau_{food}$, may, e.g., represent how fast the temperature of the foodstuff stored in the refrigerated volume 2 reacts to changes, such as changes in the temperature of the air inside the refrigerated volume 2. Furthermore, the time constant, $\tau_{food}$, for the foodstuff may reflect a heat transfer coefficient of the foodstuff stored in the refrigerated volume 2.

The estimated time constant, $\tau_{food}$, for the foodstuff stored in the refrigerated volume 2 is output from the second estimator 4, and may, e.g., be supplied to a controller used for controlling the refrigeration system.

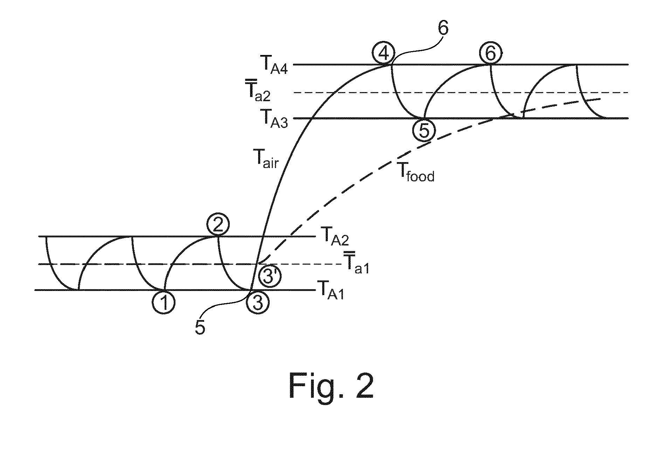

Fig. 2 is a graph illustrating temperature variations in a refrigeration system being controlled in accordance with a method according to an embodiment of the invention. The solid line represents a temperature, $T_{air}$, of air inside a refrigerated volume as a function of time, and the dotted line represents a temperature, $T_{food}$, of foodstuff stored in the refrigerated volume as a function of time.

Initially, the refrigeration system is controlled in accordance with an initial setpoint temperature, $T_{a1}$, and corresponding cut-in temperature, $T_{A2}$, and cut-out temperature, $T_{A1}$. Thus, the refrigeration system is controlled in such a manner that the temperature, $T_{air}$, of air inside the refrigerated volume is maintained within the temperature interval from $T_{A1}$ to $T_{A2}$. Since the thermal dynamics of the foodstuff stored in the refrigerated volume are much slower than the thermal dynamics of the air inside the refrigerated volume, the temperature, $T_{food}$, of the foodstuff stored in the refrigerated volume remains substantially constant at the initial setpoint temperature, $T_{a1}$, while the temperature, $T_{air}$, of the air inside the refrigerated volume fluctuates within the allowed temperature deadband, and the system is in a steady state.

During the steady state period, the temperature, $T_{air}$, of air inside the refrigerated volume is monitored, in order to investigate how the air temperature, $T_{air}$, changes in response to changes in the supply of refrigerant to the evaporator. For instance, the rate of change of the air temperature, $T_{air}$, in various phases of the temperature cycle between the cut-out temperature, $T_{A1}$, and the cut-in temperature, $T_{A2}$, may be determined. Based on the monitored air temperature, $T_{air}$, a thermal capacity of the air inside the refrigerated volume is derived, e.g. including a time constant, which is representative for the thermal dynamics of the air inside the refrigerated volume.

At time 5 the setpoint temperature, and the corresponding cut-in and cut-out temperatures, are increased to a new, higher level. The new setpoint temperature is illustrated as $T_{a2}$, the new cut-in temperature is illustrated as $T_{A4}$, and the new cut-out temperature is illustrated as $T_{A3}$. Accordingly, the refrigeration system is subsequently controlled in accordance with the new setpoint temperature, $T_{a2}$, and the corresponding new cut-in temperature, $T_{A4}$, and cut-out temperature, $T_{A3}$.

Since the new setpoint temperature, $T_{a2}$, and corresponding temperature deadband are arranged at a higher temperature level than the initial setpoint temperature, $T_{a1}$, and corresponding temperature deadband, this causes the temperature, $T_{air}$, of air inside the refrigerated volume to increase. Furthermore, the increased air temperature, $T_{air}$, causes the temperature, $T_{food}$, of the foodstuff stored in the refrigerated volume to increase. It can be seen in the graph of Fig. 2 that the temperature, $T_{air}$, of the air inside the refrigerated volume increases significantly faster than the temperature, $T_{food}$, of the foodstuff stored in the refrigerated volume.

During this increase in the temperature, $T_{air}$, of air inside the refrigerated volume the air temperature, $T_{air}$, is monitored. In particular it is detected when the new cut-in temperature, $T_{A4}$, is reached, and the time interval elapsing from the time 5 where the change in setpoint temperature was initiated and the time 6 where the new cut-in temperature, $T_{A4}$, is reached, is detected. Based on this, a thermal capacity of the foodstuff stored in the refrigerated volume is derived, e.g. including a time constant, which is representative for the thermal dynamics of the foodstuff stored in the refrigerated volume.

As described above, the change in the temperature, $T_{air}$, of air inside the refrigerated volume, following the change in temperature setpoint, depends on the heat transfer between the foodstuff stored in the refrigerated volume and the air inside the refrigerated volume. For instance, as the temperature, $T_{air}$, of the air inside the refrigerated volume increases as a result of an increase in the temperature of the evaporator, the colder foodstuff will cool the air inside the refrigerated volume, due to the heat transfer between the foodstuff and the air, thereby slowing down the increase in the air temperature, $T_{air}$. Accordingly, the length of the time interval elapsing from the change in temperature setpoint is initiated, at time 5, until the new cut-in temperature, $T_{A4}$, is reached, at time 6, provides information regarding the thermal capacity of the foodstuff stored in the refrigerated volume.

It can be seen in Fig. 2 that a new steady state is obtained at the new temperature setpoint, $T_{a2}$, when the temperature of the foodstuff, $T_{food}$, has reached this temperature level.

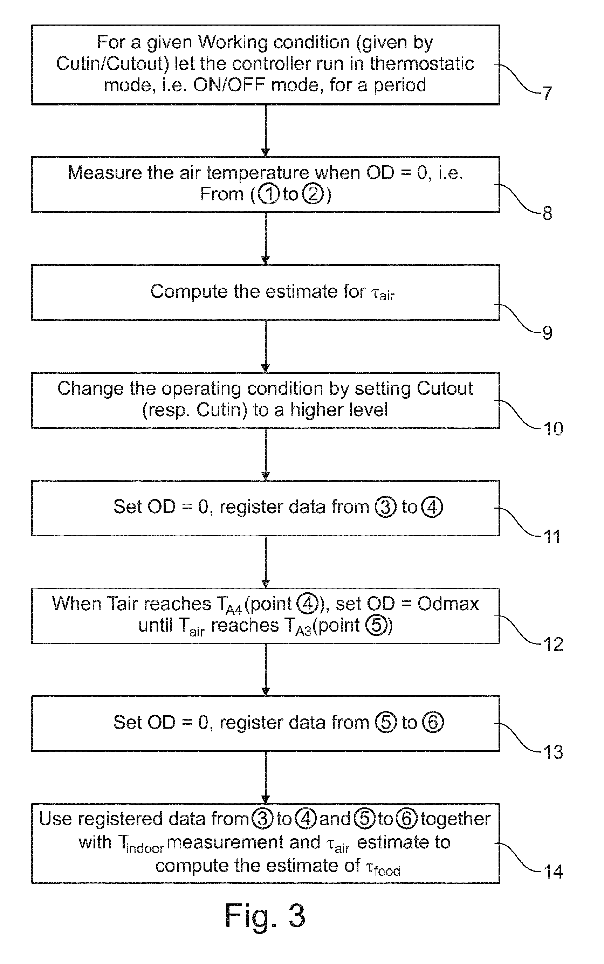

Fig. 3 is a flow chart illustrating a method according to an embodiment of the invention. At step 7 a controller controls an opening degree of an expansion valve in accordance with an initial temperature setpoint and corresponding cut-in and cut-out temperatures, e.g. as described above with reference to Fig. 1 and/or Fig. 2.

At step 8 the temperature of air inside the refrigerated volume is measured or monitored, while the expansion valve is closed, i.e. while the opening degree (OD) of the expansion valve is zero. This may, e.g., be from point (1) to point (2) in the graph of Fig. 2. In particular, it is measured how the air temperature changes from the cut-out temperature to the cut-in temperature.

At step 9 an estimate for a time constant, $\tau_{air}$, being representative for thermal dynamics of the air inside the refrigerated volume is computed, based on the air temperature measured at step 8. Thereby a thermal capacity for the air inside the refrigerated volume is obtained.

At step 10 a temperature setpoint for the air inside the refrigerated volume, and corresponding cut-in and cut-out temperatures, are increased to a higher level.

At step 11 the expansion valve is closed, i.e. the opening degree (OD) of the expansion valve is set to zero, as a consequence of the increased temperature setpoint, and in order to allow the temperature of the air inside the refrigerated volume to increase, thereby allowing the temperature of the air inside the refrigerated volume to reach the new setpoint temperature. While the temperature of the air inside the refrigerated volume increases towards the new setpoint temperature, the temperature is measured or monitored. This may, e.g., be from point (3) to point (4) in the graph of Fig. 2. In particular, the length of the time interval elapsing from the temperature setpoint is changed until the cut-in temperature of the new temperature deadband is reached, is detected.

At step 12 the temperature of the air inside the refrigerated volume reaches the cut-in temperature, i.e. the upper temperature limit of the new temperature deadband. This may, e.g., be at point (4) in the graph of Fig. 2. Then the expansion valve is opened fully, i.e. the opening degree (OD) of the expansion valve is set to a maximum value, in order to decrease the temperature of the air inside the refrigerated volume. The maximum opening degree of the expansion valve is maintained until the temperature of the air inside the refrigerated volume reaches the cut-out temperature, i.e. the lower temperature limit of the new temperature deadband. This may, e.g., be at point (5) in the graph of Fig. 2.

At step 13 the expansion valve is once again closed, i.e. the opening degree (OD) of the expansion valve is set to zero, because the temperature of the air inside the refrigerated volume has reached the cut-out temperature. Thereby the temperature of the air inside the refrigerated volume starts to increase again towards the cut-in temperature. This may, e.g., be from point (5) to point (6) in the graph of Fig. 2. During this, the temperature of the air inside the refrigerated volume is measured or monitored.

At step 14 the temperature data which was obtained during steps 11 and 13 is used along with a measured indoor temperature, $T_{indoor}$, and the time constant, $\tau_{air}$, which was estimated at step 9, for estimating a time constant, $\tau_{food}$, being representative for thermal dynamics of the foodstuff stored in the refrigerated volume. Thereby a thermal capacity for the foodstuff stored in the refrigerated volume is obtained.

**Claims**

1. A method for estimating a thermal capacity of foodstuff stored in a refrigerated volume of a refrigeration system, the refrigeration system comprising a compressor unit, a condenser unit, an expansion valve and an evaporator, arranged in a refrigerant path, the evaporator being arranged in thermal contact with the refrigerated volume, and the expansion valve being provided in the refrigerant path upstream of the evaporator, an opening degree of the expansion valve being controlled on the basis of a temperature of air inside the refrigerated volume and in order to obtain a temperature of the air inside the refrigerated volume which is equal to a setpoint temperature, the method comprising the steps of:

   - estimating a thermal capacity of air inside the refrigerated volume,
   - changing the setpoint temperature for the air inside the refrigerated volume,
   - monitoring the air temperature inside the refrigerated volume,
   - estimating a thermal capacity of the foodstuff stored in the refrigerated volume, based on the monitored air temperature inside the refrigerated volume, and based on the estimated thermal capacity of the air inside the refrigerated volume, and

- controlling the refrigeration system at least partly on the basis of the estimated thermal capacity of the foodstuff stored in the refrigerated volume.

2. A method according to claim 1, wherein the step of estimating a thermal capacity of air inside the refrigerated volume comprises determining a time constant being representative for thermal dynamics of the air inside the refrigerated volume.

3. A method according to claim 1 or 2, wherein the step of estimating a thermal capacity of the foodstuff stored in the refrigerated volume comprises determining a time constant being representative for thermal dynamics of the foodstuff stored inside the refrigerated volume.

4. A method according to any of the preceding claims, wherein the step of monitoring the temperature of air inside the refrigerated volume comprises determining a time interval elapsing from the setpoint temperature for the air inside the refrigerated volume is changed until the temperature of air inside the refrigerated volume reaches a predefined temperature level, and wherein the thermal capacity of foodstuff stored inside the refrigerated volume is further estimated based on the determined elapsed time interval.

5. A method according to claim 4, wherein the predefined temperature level is a cut-in temperature representing an upper temperature limit of a temperature deadband associated with the setpoint temperature of the air inside the refrigerated volume.

6. A method according to any of the preceding claims, wherein the step of controlling the refrigeration system at least partly on the basis of the estimated thermal capacity of the foodstuff stored in the refrigerated volume further comprises controlling the refrigeration system in accordance with a request for increased or decreased power consumption by the refrigeration system received from a power grid which the refrigeration system is connected to.

7. A method according to any of the preceding claims, wherein the step of changing a setpoint temperature for the air inside the refrigerated volume comprises increasing the setpoint temperature.

Fig. 1

Fig. 2

For a given Working condition (given by Cutin/Cutout) let the controller run in thermostatic mode, i.e. ON/OFF mode, for a period — 7

Measure the air temperature when OD = 0, i.e. From (①to②) — 8

Compute the estimate for $\tau_{air}$ — 9

Change the operating condition by setting Cutout (resp. Cutin) to a higher level — 10

Set OD = 0, register data from ③ to ④ — 11

When Tair reaches $T_{A4}$(point ④), set OD = Odmax until $T_{air}$ reaches $T_{A3}$(point ⑤) — 12

Set OD = 0, register data from ⑤ to ⑥ — 13

Use registered data from ③ to ④ and ⑤ to ⑥ together with $T_{indoor}$ measurement and $\tau_{air}$ estimate to compute the estimate of $\tau_{food}$ — 14

## Fig. 3

Europäisches
Patentamt

European
Patent Office

Office européen
des brevets

# EUROPEAN SEARCH REPORT

Application Number

EP 14 19 0504

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2013/007629 A2 (AP MOELLER MAERSK AS [DK]; LUKASSE LEIJN JOHANNES SJERP [NL]; DE KRAME) 17 January 2013 (2013-01-17) * abstract; figure 1 * * page 2, line 5 - line 16 * * page 5, line 16 - line 30 * * page 10, line 4 - line 30 * ----- | 1-7 | INV. F25D31/00 G01K7/42 |
| Y | DE 33 40 331 A1 (BOSCH SIEMENS HAUSGERAETE [DE]) 23 May 1985 (1985-05-23) * abstract; claims 1-5; figure 1 * * page 4, line 6 - line 10 * * page 4, line 19 - line 23 * * page 6, line 8 - page 7, line 27 * ----- | 1-7 | |
| Y | DE 10 2010 055903 A1 (LIEBHERR HAUSGERAETE [DE]) 26 April 2012 (2012-04-26) | 6 | |
| A | * abstract * * paragraphs [0018] - [0027], [0048] - [0050] * ----- | 1 | |
|  |  |  | TECHNICAL FIELDS SEARCHED (IPC) F25D F25B G01K |

The present search report has been drawn up for all claims

| Place of search | Date of completion of the search | Examiner |
|---|---|---|
| The Hague | 11 May 2015 | Bejaoui, Amin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**EP 3 015 803 A1**

**ANNEX TO THE EUROPEAN SEARCH REPORT
ON EUROPEAN PATENT APPLICATION NO.**

EP 14 19 0504

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2015

| Patent document cited in search report | | Publication date | Patent family member(s) | | Publication date |
|---|---|---|---|---|---|
| WO 2013007629 | A2 | 17-01-2013 | CN 103814262 A<br>WO 2013007629 A2 | | 21-05-2014<br>17-01-2013 |
| DE 3340331 | A1 | 23-05-1985 | DE 3340331 A1<br>DK 528584 A<br>FR 2554567 A1<br>IT 1178604 B | | 23-05-1985<br>09-05-1985<br>10-05-1985<br>09-09-1987 |
| DE 102010055903 | A1 | 26-04-2012 | DE 102010055903 A1<br>EP 2444765 A2 | | 26-04-2012<br>25-04-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7596432 B2

- US 6471398 B2